# EUROPÄISCHE PATENTANMELDUNG

(11) **EP 2 508 994 A1**
(43) Veröffentlichungstag der Anmeldung: **10.10.2012**
(21) Anmeldenummer: 11161705.6
(22) Anmeldetag: 08.04.2011
(51) Int. Cl.: G06F 11/30, G06F 9/455

(54) **Verfahren und Anordnung zur Überwachung des Ablaufs eines Computerprogramms**

(71) Anmelder: SIEMENS AKTIENGESELLSCHAFT, 80333 München (DE)
(72) Erfinder: Niesser, Otto, 90584 Allersberg (DE); Ünver, Halil Caglar, 90402 Nürnberg (DE)

(57) **Zusammenfassung**

Die Erfindung betrifft ein Verfahren und eine Anordnung zur Überwachung des Ablaufs auf einem ersten Betriebssystem (SBS, EBS) installierten Computerprogramms, insbesondere eines Computerprogramms zur Steuerung einer industriellen Automatisierungsanordnung, wobei ein Überwachungsprogramm (WD) zur Überwachung von Sicherheitsmeldungen des Computerprogramms oder des ersten Betriebssystems (SBS, EBS) vorgesehen ist. Dabei laufen das erste Betriebssystem (SBS, EBS) und das zu überwachende Computerprogramm auf einer ersten virtuellen Laufzeitumgebung einer Computer-Hardware, ab und das Überwachungsprogramm (WD) läuft in einer von der ersten virtuellen Laufzeitumgebung verschiedenen Laufzeitumgebung ab. Dadurch ist sichergestellt, dass eine Störung in der ersten virtuellen Laufzeitumgebung keine Auswirkung auf die Ausführung des Überwachungsprogramms hat. Zum anderen ist dadurch sichergestellt, dass das Überwachungsprogramm bei seiner regelmäßigen Ausführung die Ausführung des Computerprogramms und die Ausführung des ersten Betriebssystems nicht unvorhersehbar unterbricht oder stört.

## Beschreibung

Die Erfindung betrifft ein Verfahren zur Überwachung des Ablaufs eines auf einem ersten Betriebssystem installierten Computerprogramms gemäß dem Oberbegriff des Patentanspruchs 1, und eine Anordnung zur Überwachung des Ablaufs eines auf einen ersten Betriebssystem installierten Computerprogramms gemäß dem Oberbegriff des Patentanspruchs 6.

In vielen Anwendungen von Computerprogrammen, insbesondere bei Computerprogrammen, die in industriellen Automatisierungsanordnungen, eingesetzt werden, wird eine Überwachung des ordnungsgemäßen Betriebs und somit eines ordnungsgemäßen Ablaufs der eingesetzten Computerprogramme verlangt. Während in noch verfügbaren Systemen meist redundante Steuerungen zum Einsatz kommen, bei denen sowohl die Hardware als auch die Software doppelt ausgeführt sind, kann der dadurch entstehende hohe Aufwand oft verringert werden, indem Überwachungseinrichtungen eingesetzt werden. Solche Überwachungseinrichtungen werden auch als "Watchdog"-Einrichtungen bezeichnet. Solche "Watchdogs" sind oft als Hardware ausgeführt, wobei beispielsweise ein zu überwachendes Computerprogramm regelmäßig eine Hardware-Schnittstelle umschalten muss, oder ein anderes oft als "Trigger" bezeichnetes Ereignis erzeugen muss. Sofern dieses Ereignis ausbleibt, führt der Hardware-Watchdog eine bestimmte Aktion aus, meist ein sog. "Reset" der Computer-Hardware, auf der das zu überwachende Computerprogramm installiert ist und abläuft.

Ein solcher "Reset" kann dann zu einem "Restart" des Computerprogramms führen, wonach im Allgemeinen der ordnungsgemäße Betreib wieder aufgenommen werden kann. In vielen Fällen steuern solche Computerprogramme jedoch sicherheitskritische oder wichtige Anlagen, wobei eine Vielzahl von Hardware-Ausgängen im Sinne von digitalen Ausgängen oder analogen Ausgängen durch das Computerprogramm gesteuert werden. Zur Vermeidung von Schäden ist es dabei oft notwendig, nach einer Störung möglichst schnell die Hardware-Ausgänge in einen definierten Zustand zu bringen, so dass beispielsweise gefährliche Geräte abgeschaltet werden o.ä. In solchen Fällen ist die Absicherung eines Computerprogramms mittels eines "Hardware-Watchdogs" komplex und unflexibel, so dass in solchen Fällen ein sog. "Software-Watchdog" zum Einsatz kommt; dieser kann mit einem "Hardware-Watchdog" kombiniert sein bzw. von diesem angesteuert oder gestartet werden. Ein solcher "Software-Watchdog" wird auch als Überwachungsprogramm bezeichnet.

Die Anordnung ist dann regelmäßig derart ausgestaltet, dass im Falle eines Fehlers, beispielsweise Programmabsturz etc., das Überwachungsprogramm die Kontrolle über die Hardware-Ausgänge übernimmt und diese so lange in einen sicheren Zustand oder in eine sichere Abfolge von Zuständen versetzt, bis das reguläre Computerprogramm wieder angelaufen ist. Insbesondere in den Fällen, in denen das Überwachungsprogramm nicht mit einem Hardware-Watchdog verknüpft ist, muss das Überwachungsprogramm regelmäßig ausgeführt werden, um innerhalb einer definierten Reaktionszeit eine Fehlfunktion des zu überwachenden Computerprogramms feststellen zu können und um rechtzeitig Reaktionen ausüben zu können. Dies bedeutet, dass ein Überwachungsprogramm, welches beispielsweise als ein Prozess, ein Modul oder ein Unterprogramm des zu überwachenden Computerprogramms oder als ein Programm basierend auf demselben Betriebssystem, wie das zu überwachende Computerprogramm, ausgestaltet ist, regelmäßig das zu überwachende Computerprogramm unterbricht. Dies ist insbesondere in den Fällen, in denen mittels des Computerprogramms Echtzeitanforderungen zu erfüllen sind, störend.

Ein weiterer Nachteil besteht darin, dass bei einer Störung ("Absturz" o.ä.) des gemeinsamen Betriebssystems, auf dem das Computerprogramm und das Überwachungsprogramm ablaufen, auch das Überwachungsprogramm nicht mehr ordnungsgemäß funktioniert und somit eine ordnungsgemäße Reaktion auf eine Fehlfunktion nicht mehr gegeben ist.

Es ist daher eine Aufgabe der vorliegenden Erfindung, insbesondere bei den als Software realisierten Überwachungseinrichtungen, also den Überwachungsprogrammen, die Beeinträchtigungen des regulären Betriebs eines Computerprogramms zu reduzieren und zur Erhöhung der Betriebssicherheit die Auswirkungen einer Störung auf das Überwachungsprogramm zu verringern.

Es ist dabei eine Kernidee der erfindungsgemäßen Lösung der Aufgabe, dass das Überwachungsprogramm in einer anderen Laufzeitumgebung ausgeführt wird, als das zu überwachende Computerprogramm. Insbesondere ist es eine Kernidee der vorliegenden Erfindung, das zu überwachende Computerprogramm und das Betriebssystem, auf dem dieses zu überwachende Computerprogramm abläuft, in einer ersten virtuellen Laufzeitumgebung einer Computer-Hardware zum Ablauf zu bringen, während das Überwachungsprogramm außerhalb dieser ersten virtuellen Laufzeitumgebung zur Ausführung gebracht wird.

Die Aufgabe wird insbesondere durch ein Verfahren gemäß dem Patentanspruch 1 und durch eine Anordnung gemäß dem Patentanspruch 6 gelöst.

Dazu wird ein Verfahren zur Überwachung des Ablaufs auf einem ersten Betriebssystem installierten Computerprogramms, insbesondere eines Computerprogramms zur Steuerung einer industriellen Automatisierungsanordnung, vorgeschlagen, wobei ein Überwachungsprogramm zur Überwachung von Sicherheitsmeldungen des Computerprogramms oder des ersten Betriebssystems vorgesehen ist. Dabei laufen das erste Betriebssystem und das zu überwachende Computerprogramm in einer ersten virtuellen Laufzeitumgebung einer Computer-Hardware ab, und das Überwachungsprogramm läuft in einer von der ersten virtuellen Laufzeitumgebung verschiedenen Laufzeitumgebung ab. Durch dieses Verfahren ist zum einen sichergestellt, dass eine Störung in der ersten virtuellen Laufzeitumgebung, also eine Störung des ersten Betriebssystems und/oder des Computerprogramms, keine Auswirkungen auf die Ausführung des Überwachungsprogramms haben. Zum anderen ist durch dieses Verfahren sichergestellt, dass das Überwachungsprogramm bei seiner Ausführung die Ausführung des Computerprogramms nicht unvorhersehbar unterbricht oder stört.

Die Lösung der Aufgabe sieht außerdem eine Anordnung zur Überwachung des Ablaufs eines auf einem ersten Betriebssystem installierten Computerprogramms, insbesondere eines Computerprogramms zur Steuerung einer industriellen Automatisierungsanordnung, vor, wobei ein Überwachungsprogramm zur Überwachung von Sicherheitsmeldungen des Computerprogramms oder des ersten Betriebssystems vorgesehen ist. Dabei sind das erste Betriebssystem und das zu überwachende Computerprogramm auf einer ersten virtuellen Laufzeitumgebung einer Computer-Hardware installiert, und das Überwachungsprogramm ist in einer von der ersten Laufzeitumgebung verschiedenen zweiten Laufzeitumgebung installiert. Durch diese Anordnung können dieselben Vorteile realisiert werden, die auch mit dem erfindungsgemäßen Verfahren verbunden sind.

Vorteilhafte Ausgestaltungen des erfindungsgemäßen Verfahrens sind in den abhängigen Patentansprüchen 2 bis 6 angegeben; vorteilhafte Ausgestaltungen der erfindungsgemäßen Anordnung sind in den abhängigen Patentansprüchen 8 bis 12 angegeben. Dabei gelten die für die vorteilhaften Ausgestaltungen des erfindungsgemäßen Verfahrens beschriebenen Merkmale und Vorteile sinngemäß auch für die erfindungsgemäße Anordnung, und umgekehrt.

In einer ersten Variante der Architektur der erfindungsgemäßen Anordnung und des erfindungsgemäßen Verfahrens ist das Überwachungsprogramm Bestandteil einer Verwaltungseinrichtung für virtuelle Laufzeitumgebungen der Computer-Hardware, also eines sog. "Virtual Machine Monitor" (VMM).

Dadurch kann das Überwachungsprogramm auch mehrere virtuelle Maschinen, mehrere virtuelle Laufzeitumgebungen, und die darin befindlichen Betriebssysteme und Computerprogramme überwachen. In einer zweiten vorteilhaften Ausgestaltung der erfindungsgemäßen Architektur bzw. des erfindungsgemäßen Verfahrens kann das Überwachungsprogramm jedoch auch auf einer weiteren virtuellen Maschine, also einer zweiten virtuellen Laufzeitumgebung, und in einem darin befindlichen bzw. installierten Betriebssystem realisiert sein. Dies hat den Vorteil, dass das Überwachungsprogramm leichter verändert bzw. an sich ändernde Anforderungen angepasst werden kann. Insbesondere macht eine solche Architektur es möglich, dass das Überwachungsprogramm während der Laufzeit des zu überwachenden Computerprogramms verändert oder angepasst werden kann. Insbesondere kann in einem solchen Fall das Überwachungsprogramm auch Bestandteil eines Standard-Betriebssystems sein, welches dann in der zweiten virtuellen Laufzeitumgebung installiert wird und abläuft. Diese Variante bietet außerdem den Vorteil, dass mit dem Überwachungsprogramm, welches in einer separaten virtuellen Laufzeitumgebung realisiert ist, auch solche Computerprogramme überwachbar sind, die auf einer anderen Computer-Hardware ablaufen.

Das erfindungsgemäße Verfahren und damit auch die erfindungsgemäße Anordnung sind insbesondere dann mit einer hohen Sicherheit zu betreiben, wenn es sich bei der Computer-Hardware um ein Multiprozessor-System oder allgemein um ein System mit mehreren Prozessorkernen handelt. In einem solchen Fall kann das Überwachungsprogramm auf einem anderen Prozessorkern zur Ausführung gebracht werden, als das zu überwachende Computerprogramm. Dies bietet zum einen den Vorteil, dass die Ausführung des Überwachungsprogramms keine negativen Auswirkungen, beispielsweise in Form von Unterbrechungen oder Rechenzeitbedarf, auf den Prozessorkern mit dem ersten Betriebssystem und damit dem Computerprogramm hat. Zum anderen ist damit der Vorteil verbunden, dass eine schwerwiegende Störung, die beispielsweise von dem ersten Betriebssystem oder dem Computerprogramm verursacht wird und zum vollständigen Halt des Prozessorkerns mit dem ersten Betriebsystem zur Folge hat, den Ablauf des Überwachungsprogramms auf dem anderen Prozessorkern nicht beeinträchtigt. Somit ist eine höhere Ausfallsicherheit gegeben. Eine solche Architektur ist insbesondere dann von Vorteil, wenn es sich bei dem ersten Betriebssystem um ein solches mit einer Echtzeit-Erweiterung handelt und das Computerprogramm Echtzeitanforderungen erfüllen muss. In einem solchen Fall kann der Rechenzeitbedarf des Überwachungsprogramms in den Fällen, in denen das Überwachungsprogramm auf dem gleichen Prozessorkern oder dem gleichen ersten Betriebssystem wie das Computerprogramm ausgeführt wird, zu Ausführungsverzögerungen und damit zu einem zumindest teilweisen Verlust der Echtzeitfähigkeit führen. In einer Ausführung, bei der das Überwachungsprogramm in einer anderen virtuellen Laufzeitumgebung und vorteilhaft auf einem anderen Prozessorkern eingerichtet ist, bleibt dagegen die Echtzeitfähigkeit des ersten Betriebssystems voll erhalten.

Es ist zu beachten, dass das erste Betriebssystem nicht notwendiger Weise identisch sein muss mit einem Betriebssystem, in dem die Überwachungseinrichtung realisiert ist bzw. auf welchem Überwachungseinrichtung abläuft. Somit kann die Überwachungseinrichtung auch zur gleichzeitigen Überwachung einer Anzahl von Computerprogrammen unterschiedlicher Betriebssysteme eingesetzt werden.

Ausführungsbeispiele des erfindungsgemäßen Verfahrens werden nachfolgend anhand der Zeichnungen erläutert. Sie dienen gleichzeitig der Erläuterung von Ausführungsbeispielen der erfindungsgemäßen Anordnung. Dabei können verschiedene Merkmale der verschiedenen Ausführungsformen und Ausführungsbeispiele auch miteinander kombiniert werden, ohne von der erfinderischen Idee abzuweichen. Dabei zeigen:
- Figur 1: in einer schematischen Darstellung die Software-Architektur einer Computer-Hardware, bei der eine Überwachungseinrichtung Bestandteil einer Verwal- tungseinrichtung für virtuelle Laufzeitumgebungen ist,
- Figur 2: in einer schematischen Darstellung eine alternative Software-Architektur einer Computer-Hardware, wobei die Überwachungseinrichtung in einer separaten virtuellen Laufzeitumgebung abläuft,
- Figur 3: in schematischer Darstellung eine Fehlersituation und den dabei ausgetauschten Meldungen in einer Anordnung gemäß der Figur 1, und
- Figur 4: in schematischer Darstellung eine Fehlersituation und die dabei ausgetauschten Meldungen in einer Anordnung nach Figur 2.

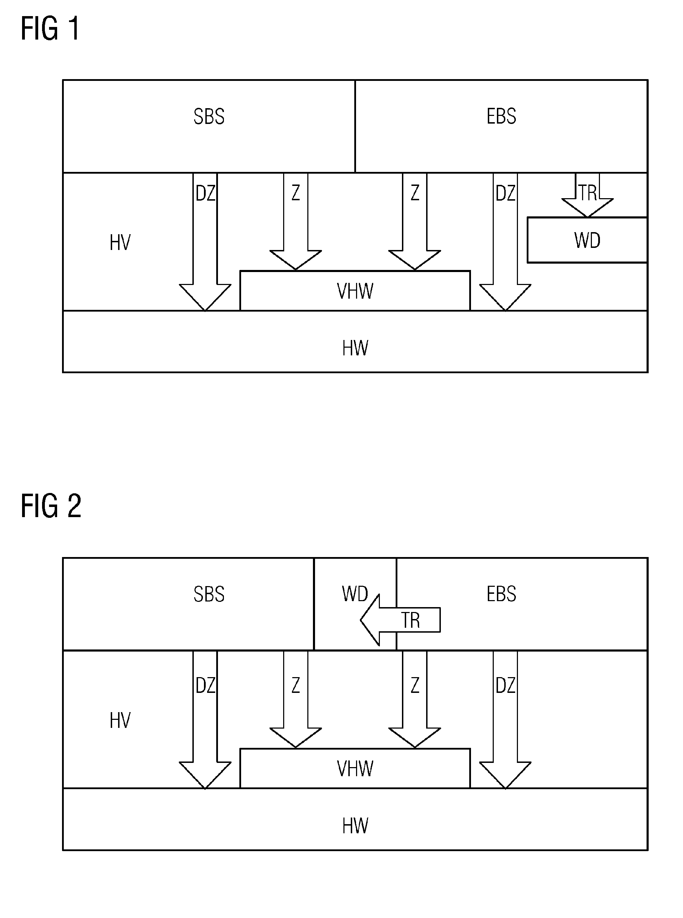

In der Figur 1 ist die Struktur einer Computer-Hardware HW und der darauf installierten und ablaufenden Software dargestellt. Die mit der Figur 1 eingeführten Begriffe und Bezeichnungen gelten sinngemäß auch für die Figuren 2 bis 4. In der Figur 1 ist also schematisch eine Computer-Hardware (kurz: Hardware) HW dargestellt, auf der eine Verwaltungseinrichtung HV für die Verwaltung virtueller Laufzeitumgebungen installiert ist. Eine solche Verwaltungseinrichtung HV wird auch als "Virtual Machine Monitor" (VMM) bezeichnet. Ein Teil der Computer-Hardware HW wird dabei als virtualisierte Hardware VHW den virtuellen Laufzeitumgebungen zur Verfügung gestellt. Dies bedeutet, dass die virtualisierte Hardware VHW sich den virtuellen Laufzeitumgebungen wie eine reale Hardware HW präsentiert, jedoch die Zugriffe Z aus den virtuellen Laufzeitumgebungen heraus auf die reale Hardware HW von der Verwaltungseinrichtung HV bedient werden, wobei für diejenige reale Hardware HW, die als virtualisierte Hardware VHW verwaltet wird, diese Zugriffe Z in Zugriffe auf die reale Hardware HW umgesetzt werden. Daneben können die virtuellen Laufzeitumgebungen auch Direktzugriffe DZ auf die reale Hardware HW haben; die Verwaltung von indirekten Zugriffen Z und direkten Zugriffen DZ ist ein typisches Merkmal der Veraltungseinrichtungen HV und im Stand der Technik bekannt.

Im Folgenden soll angenommen werden, dass zwei virtuelle Laufzeitumgebungen verwaltet werden, wobei in einer der virtuellen Laufzeitumgebungen ein erstes Betriebssystem, nämlich ein Echtzeit-Betriebssystem EBS installiert ist und abläuft, und in einer zweiten virtuellen Laufzeitumgebung ein Standard-Betriebssystem SBS. Jedes dieser Betriebssysteme EBS, SBS kann sowohl Direktzugriffe DZ auf der Computer-Hardware HW als auch Zugriffe Z auf virtualisierte Hardware VHW durchführen.

In einer ersten Ausgestaltung der Erfindung zeigt die Figur 1 ein Überwachungsprogramm WD ("Watchdog"), welches als ein Programmmodul ein Bestandteil der Verwaltungseinrichtung HV ist, also im "Virtual Machine Monitor" angeordnet ist.

Im Folgenden soll angenommen werden, dass das Echtzeit-Betriebssystem EBS mit dem zu überwachenden Computerprogramm versehen ist. Dabei wird zur Laufzeit des Computerprogramms bzw. zur Laufzeit des Echtzeit-Betriebssystems EBS in regelmäßigen Zeitabständen eine Triggermeldung TR erzeugt und an das Überwachungsprogramm WD übertragen. Dabei können die Triggermeldungen TR entweder von dem Echtzeit-Betriebssystem EBS oder durch das zu überwachende Computerprogramm, oder durch beide Instanzen erzeugt werden, je nach dem, auf welcher Ebene die Überwachung stattfinden soll.

In der Figur 2 ist ebenfalls eine Anordnung schematisch dargestellt, in der ein Computerprogramm, welches mittels des Echtzeit-Betriebssystems EBS betrieben wird, überwacht werden soll. Im Unterschied zu der anhand der Figur 1 beschriebenen Anordnung ist das Überwachungsprogramm WD jedoch in einer eigenen virtuellen Laufzeitumgebung angeordnet, welche mit einem (nicht dargestellten) eigenen Betriebssystem ausgerüstet ist. Hierbei werden also die Triggermeldungen TR von dem Echtzeit-Betriebssystem EBS bzw. dem zu überwachenden Computerprogramm analog zu dem Fall aus der Figur 1 ebenfalls zu dem Überwachungsprogramm WD übertragen. Dazu kann, wie dargestellt, ein direkter Kommunikationskanal zwischen dem Echzeit-Betriebssystem EBS und dem Betriebssystem mit dem Überwachungsprogramm WD etabliert sein. Im realen Betrieb wird jedoch für den Austausch von Meldungen, insbesondere der Triggermeldung TR, ein Kommunikations-Framework der Verwaltungseinrichtung HV benutzt. In einer Ausgestaltung können solche Meldungen, beispielsweise die Triggermeldungen TR, sogar über externe Kommunikationsschnittstellen der Hardware HW geroutet werden. Wichtig ist dabei jedenfalls, dass zwischen dem Echtzeit-Betriebssystem EBS bzw. dem darauf ablaufenden und zu überwachenden Computerprogramm und dem Überwachungsprogramm WD ein Meldungs- oder Datenaustausch möglich ist.

Bei den anhand der Figur 1 und der Figur 2 erläuterten Anordnungen werden im "Normalbetrieb", also im fehlerfreien Fall, periodisch von dem Echtzeitbetriebssystem EBS oder alternativ oder zusätzlich von dem zu überwachenden Computerprogramm Triggermeldungen TR zu dem Überwachungsprogramm WD übermittelt. Bei diesen Meldungen ist es auf möglichst geringen "Overhead" zu achten, d.h. dass diese Triggermeldungen TR nur so oft wie unbedingt notwendig zu übermitteln sind und überdies einen möglichst geringen Datenumfang aufweisen sollten. Bei höheren Sicherheitsanforderungen können diese Triggermeldungen TR auch durch das Überwachungsprogramm angefordert werden, wobei beispielsweise jede Anforderungsmeldung die anzufordernde Triggermeldung TR spezifiziert. Dies bedeutet, dass jede Triggermeldung TR sich von anderen Triggermeldungen TR unterscheidet, so dass nicht versehentlich ältere Triggermeldungen TR, die beispielsweise nur verzögert übertragen werden, als Nachweis für die aktuelle Funktionsfähigkeit des Echtzeit-Betriebssystems EBS oder des zu überwachenden Computerprogramms gewertet werden können.

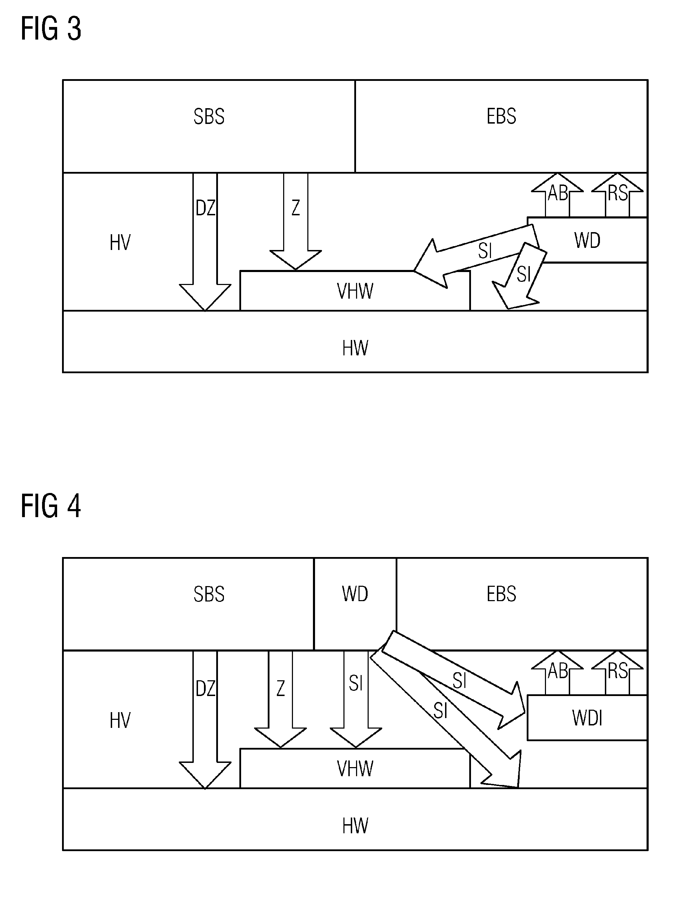

Anhand der Figuren 3 und 4 soll im Folgenden der Fehlerfall erläutert werden, d.h., dass hier der Fall diskutiert wird, in dem entweder das Echtzeit-Betriebssystem EBS oder das zu überwachende Computerprogramm nicht oder nicht ordnungsgemäß funktionieren.

Dabei zeigt die Figur 3 in schematischer Darstellung die Reaktion des Überwachungsprogramms WD im Fehlerfall. Der Fehlerfall kann dabei entweder durch das Ausbleiben von Triggermeldungen TR erkannt werden, oder aber dadurch, dass das Echtzeit-Betriebssystem EBS oder alternativ das zu überwachende Computerprogramm selbsttätig eine Unregelmäßigkeit feststellen und eine (nicht dargestellte) Fehlermeldung zu dem Überwachungsprogramm WD übertragen. Der letztgenannte Fall kann realisiert werden, indem beispielsweise das Echtzeit-Betriebssystem EBS die Verwaltungseinrichtung HV mittels eines sog. "Hypercalls" ruft, wonach die Verwaltungseinrichtung HV die Kontrolle über den Mikroprozessor oder einen der Prozessorkerne übernimmt, das als Modul ausgeführte Überwachungsprogramm WD aufruft und dabei eine Fehlermeldung weitergibt. Danach versetzt das Überwachungsprogramm WD einen durch das Computerprogramm gesteuerten Prozess in einen sicheren Zustand, indem Sicherungsanweisungen SI zur Steuerung der realen Hardware HW bzw. der virtualisierten Hardware VHW gegeben werden. Dies können beispielsweise Anweisungen sein, mit denen Schnittstellen oder sog. "I/O-Baugruppen" derart angesteuert werden, dass gesteuerte Motoren, Ventile, Aktuatoren und Geräte in einen definierten Betriebszustand versetzt werden. Dabei hat das Überwachungsprogramm WD potentiell Zugriff auf alle dem Echtzeit-Betriebssystem EBS zugeordneten Hardware-Schnittstellen. Die Informationen darüber, welche der Schnittstellen in welcher Weise behandelt werden sollen, können mittels Parametern oder Scripten definiert werden, die dem Überwachungsprogramm WD zugänglich sind.

In einer weiteren Aktion, die auch parallel zur Absicherung des zu steuernden Prozesses oder der zu steuernden Automatisierungslösung durchgeführt werden kann, gibt das Überwachungsprogramm WD auch Anweisungen für den Abbruch AB und optional für den Restart RS entweder des Echtzeit-Betriebsystems EBS oder des überwachten Computerprogramms. Nachdem die Betriebsfähigkeit des Computerprogramms bzw. des Echtzeit-Betriebssystems EBS wieder hergestellt ist, wird das beispielsweise anhand von neuen Triggermeldungen TR von dem Überwachungsprogramm WD erkannt, so dass die Kontrolle über die Schnittstellen und somit über die Hardware HW bzw. die virtualisierte Hardware VHW wieder an das Echtzeit-Betriebssystem und damit an das zu überwachende Computerprogramm zurück übergeben werden kann.

Während anhand der Figur 3 der Fehlerfall diskutiert wurde, der in einer Anordnung gemäß der Figur 1 auftreten kann, werden nachfolgend anhand der Figur 4 die Unterschiede diskutiert, die sich bei einer Anordnung gemäß der Figur 2 ergeben. Im Unterschied zu der zuvor diskutierten Situation ist das Überwachungsprogramm WD in einer separaten virtuellen Laufzeitumgebung untergebracht. Da hier jedoch das Überwachungsprogramm WD nicht Bestandteil der Verwaltungseinrichtung HV ist, kann das Überwachungsprogramm WD auch nicht direkt den Ablauf des Echtzeit-Betriebssystems EBS steuern, also beispielsweise die Befehle oder Meldungen zum Abbruch AB oder zum Restart RS geben. Daher ist die Verwaltungseinrichtung HV mit einer Stellvertreter-Instanz, dem sog. "Watchdog-Interface" WDI ausgestattet. Sobald das Überwachungsprogramm WD einen Fehler erkennt, was analog zu der Verfahrensweise gemäß der Figur 3 geschehen kann, werden durch Sicherungsmeldungen SI zum Einen die reale Hardware HW und die virtualisierte Hardware VHW in den bereits diskutierten gesicherten Zustand überführt, also in einen vordefinierten Zustand der Ein- und Ausgabeschnittstellen. Selbstverständlich kann die Absicherung auch in einer definierten Folge von Anweisungen bestehen, die in einem festgelegten zeitlichen Rahmen nacheinander durchgeführt werden. Zum Anderen werden durch das Überwachungsprogramm direkte Meldungen SI zur Absicherung an das Watchdog-Interface WDI gerichtet, welches wiederum durch spezielle Meldungen den Abbruch AB des laufenden Computerprogramms oder den Abbruch der Ausführung des Echtzeit-Betriebssystems EBS veranlassen und danach optional durch weitere Meldungen den Restart RS des Echtzeit-Betriebssystems EBS und danach ebenfalls optional des überwachten Computerprogramms initiieren.

Es ist an allen Figuren zu sehen, dass die virtuelle Laufzeitumgebung mit dem Standard-Betriebssystem SBS vollkommen entkoppelt von den Vorgängen in der virtuellen Laufzeitumgebung mit dem Echtzeit-Betriebssystem EBS und der Laufzeitumgebung mit dem Überwachungsprogramm WD abläuft, unabhängig davon, ob das Überwachungsprogramm WD in einer separaten Laufzeitumgebung angeordnet ist, oder aber Bestandteil des "Hypervisors" HV ist, wobei die "Virtualisierungsschicht" eine separate Laufzeitumgebung darstellt.

Eine besonders vorteilhafte Ausgestaltung ergibt sich, wenn die Hardware HW ein Multi-Prozessorsystem ist oder mit einem Mehrkern-Prozessor ausgestattet ist. In beiden Fällen kann das Echtzeit-Betriebssystem auf einem separaten Prozessorkern ausgeführt werden, um eine noch bessere Entkopplung von den anderen Prozessen auf derselben Maschine zu gewährleisten. Solche Multi-Prozessorsysteme bzw. Systeme mit Mehrkern-Prozessoren werden durch die gebräuchlichen Verwaltungseinrichtungen HV, also durch die gebräuchlichen "Virtual Machine Monitors", bereits unterstützt. Es muss lediglich eine genaue Definition darüber vorgegeben werden, welche Prozesse durch welchen Kern ausgeführt werden sollen.

## Patentansprüche

1. Verfahren zur Überwachung des Ablaufs auf einem ersten Betriebssystem (SBS, EBS) installierten Computerprogramms, insbesondere eines Computerprogramms zur Steuerung einer industriellen Automatisierungsanordnung,
wobei ein Überwachungsprogramm (WD) zur Überwachung von Sicherheitsmeldungen des Computerprogramms oder des ersten Betriebssystems (SBS, EBS) vorgesehen ist,
**dadurch gekennzeichnet, dass**
das erste Betriebssystem (SBS, EBS) und das zu überwachende Computerprogramm auf einer ersten virtuellen Laufzeitumgebung einer Computer-Hardware ablaufen, und
dass das Überwachungsprogramm (WD) in einer von der ersten virtuellen Laufzeitumgebung verschiedenen Laufzeitumgebung abläuft.

2. Verfahren nach Patentanspruch 1,
**dadurch gekennzeichnet,**
**dass** das Überwachungsprogramm (WD) als Modul zum Ablauf in einer Verwaltungseinrichtung (HV) für virtuelle Laufzeitumgebungen der Computer-Hardware vorgesehen wird.

3. Verfahren nach einem der vorhergehenden Patentansprüche,
**dadurch gekennzeichnet,**
**dass** das Überwachungsprogramm (WD) in einer von der ersten Laufzeitumgebung verschiedenen zweiten virtuellen Laufzeitumgebung mit einem zweiten Betriebssystem ausgeführt wird.

4. Verfahren nach einem der vorhergehenden Patentansprüche,
**dadurch gekennzeichnet,**
**dass** als das erste Betriebssystem (SBS, EBS) ein Betriebssystem (SBS, EBS) mit einer Echtzeit-Funktionalität verwendet wird.

5. Verfahren nach einem der vorhergehenden Patentansprüche,
**dadurch gekennzeichnet,**
**dass** die Computer-Hardware mehrere Prozessorkerne umfasst, wobei das Überwachungsprogramm (WD) auf einem anderen der Prozessorkerne als das zu überwachende Computerprogramm ausgeführt wird.

6. Anordnung zur Überwachung des Ablaufs eines auf einem ersten Betriebssystem (SBS, EBS) installierten Computerprogramms, insbesondere eines Computerprogramms zur Steuerung einer industriellen Automatisierungsanordnung,
wobei ein Überwachungsprogramm (WD) zur Überwachung von Sicherheitsmeldungen des Computerprogramms oder des ersten Betriebssystems (SBS, EBS) vorgesehen ist,
**dadurch gekennzeichnet,**
**dass** das erste Betriebssystem (SBS, EBS) und das zu überwachende Computerprogramm auf einer ersten virtuellen Laufzeitumgebung einer Computer-Hardware installiert sind, und
**dass** das Überwachungsprogramm (WD) in einer von der ersten Laufzeitumgebung verschiedenen zweiten Laufzeitumgebung installiert ist.

7. Anordnung nach Patentanspruch 6,
**dadurch gekennzeichnet,**
**dass** das Überwachungsprogramm (WD) ein Bestandteil einer Verwaltungseinrichtung (HV) für virtuelle Laufzeitumgebungen der Computer-Hardware ist.

8. Anordnung nach Patentanspruch 6 oder 7,
**dadurch gekennzeichnet,**
**dass** das Überwachungsprogramm (WD) in einer von der ersten Laufzeitumgebung verschiedenen zweiten virtuellen Laufzeitumgebung mit einem zweiten Betriebssystem installiert ist.

9. Anordnung nach einem der Patentansprüche 6 bis 8,
**dadurch gekennzeichnet,**
**dass** das erste Betriebssystem (SBS, EBS) ein Betriebssystem (SBS, EBS) mit einer Echtzeit-Funktionalität ist.

10. Anordnung nach einem der Patentansprüche 6 bis 9,
**dadurch gekennzeichnet,**
**dass** die Computer-Hardware (HW) mehrere Prozessorkerne aufweist, wobei das Überwachungsprogramm (WD) zur Aufführung auf einem anderen der Prozessorkerne als das zu überwachende Computerprogramm vorgesehen und eingerichtet ist.
